Europäisches Patentamt

European Patent Office

Office européen des brevets

(11) Veröffentlichungsnummer: **0 314 939 B1**

(19)

(12) **EUROPÄISCHE PATENTSCHRIFT**

(45) Veröffentlichungstag der Patentschrift: **04.12.91**

(51) Int. Cl.⁵: **C01G 25/02**

(21) Anmeldenummer: **88116717.5**

(22) Anmeldetag: **08.10.88**

(54) **Zirkonoxidpulver, Verfahren zu seiner Herstellung und Verwendung.**

(30) Priorität: **31.10.87 DE 3737064**

(43) Veröffentlichungstag der Anmeldung:
**10.05.89 Patentblatt 89/19**

(45) Bekanntmachung des Hinweises auf die
Patenterteilung:
**04.12.91 Patentblatt 91/49**

(84) Benannte Vertragsstaaten:
**BE DE ES FR GB NL SE**

(56) Entgegenhaltungen:
**EP-A- 0 171 736      WO-A-87/07885**
**DD-A- 239 396        GB-A- 1 476 642**
**US-A- 2 984 628      US-A- 3 334 962**
**US-A- 4 619 817**

**PATENT ABSTRACTS OF JAPAN**

**PATENT ABSTRACTS OF JAPAN BAND 11,
NR. 267 (C-443)(2714), 28 AUGUST 1987; &
JP-A-62 65932 (NIPPON MINING CO LTD)
25.03.1987**

(73) Patentinhaber: **Degussa Aktiengesellschaft
Weissfrauenstrasse 9
W-6000 Frankfurt am Main 1(DE)**

(72) Erfinder: **Kriechbaum, Gangolf, Dr.
Wilhelm-Busch-Strasse 3
W-6463 Freigericht(DE)**
Erfinder: **Kleinschmit, Peter, Dr.
Wildaustrasse 19
W-6450 Hanau 9(DE)**
Erfinder: **Peuckert, Doris, Dr.
Thüringer Weg 24
W-6238 Hofheim/Taunus(DE)**

**Beschreibung**

Die Erfindung betrifft ein kristallines Zirkonoxidpulver, das zur Herstellung von Sinterkeramik verwendet werden kann.

Es ist bekannt, stabilisierte Zirkonoxidpulver auf hydrothermalem Wege herzustellen (US-PS 46 19 817).

Dabei wird eine wässrige Zirkonsalzlösung z. B. mit dem Komplexbildner Ethylendiamintetraessigsäure sowie mit Stabilisatorionen der Elemente Calcium, Magnesium und/oder Yttrium vermischt und anschließend mit Natriumlaugelösung auf einen pH-Wert über 11 titriert.

Die Mischung, die eine Natronlaugekonzentration von über 4 Mol pro Liter aufweist, wird in einem Autoklaven hydrothermal bei Temperaturen um 190 °C behandelt. Das Produkt ist tetragonales bzw. kubisches Zirkonoxid.

Gemäß den Beispielen 24 und 25 der US-PS 46 19 817 wird zwar kein Komplexbildner eingesetzt, jedoch ist die Natronlaugekonzentration nach der Tiration mit NaOH mit 0,29 Mol / l sehr niedrig.

Das bekannte Verfahren hat die folgenden Nachteile:
- Durch die Zugabe eines Komplexbildners erfolgt eine Senkung des pH-Wertes. Dies hat die Bildung von Pulvern mit spezifischen Oberflächen >30 qm / g zur Folge. Die sehr kleinen Primärkristallite führen beim Trocknen dieser Pulver zur Ausbildung von Agglomeraten. Dadurch wird ihre Verarbeitung in Formgebungsverfahren, die einen trocknen oder halbtrocknen Preßschritt enthalten, erheblich erschwert bzw. verhindert. Der Preßvorgang führt dabei zur Ausbildung von Spannungen im Grünund damit auch im Sinterkörper.
- Der Komplexbildner bzw. die Zersetzungsprodukte des Komplexbildners führen durch die durch sie verursachte Korrosion zu einer erheblichen Einschränkung in der Verwendung metallischer Werkstoffe und damit zu erhöhten Kosten. Die Verwendung von Teflon als Auskleidung im Autoklaven, wie im US-Patent beschrieben, schränkt den möglichen Temperaturbereich ein und führt zu der Notwendigkeit unter Inertbedingungen zu arbeiten, was wiederum die Kosten erhöht.

Durch die Titration der sauren Zr-/Y-/Mg-Salzlösung mit NaOH-Lauge werden aufgrund der fraktionierten Fällung inhomogene Metallhydroxid-Niederschläge erzeugt.

Die in den Beispielen gewählten niedrigen NaOH-Konzentrationen von gesamt <0,3 Mol / l und die damit verbundenen niedrigen pH-Werte führen zu den in der US-PS 46 19 817 beschriebenen nachteiligen hohen spezifischen Oberflächen.

Gegenstand der Erfindung ist ein kristallines Zirkonoxidpulver mit einer BET-Oberfläche von <30 $m^2$ / g, vorzugsweise 10 bis 20 $m^2$ / g, einer Primärteilchengröße von 0,1 bis 0,5 $\mu m$, einer monoklinen Kristallstruktur, gegebenenfalls einem Gehalt an $Y_2O_3$ von 1 bis 10 Gew.-% und/oder an 1 bis 10 Gew.-% MgO.

In einer bevorzugten Ausführungsform weist das kristalline Zirkonoxidpulver eine Teilchengrößenverteilung von 90 % zwischen 0,1 und 1 $\mu m$ auf.

Ein weiterer Gegenstand der Erfindung ist das Verfahren zur Herstellung des kristallinen Zirkonoxidpulvers mit einer BET-Oberfläche von <30 $m^2$ / g, vorzugsweise 10 bis 20 $m^2$ / g, einer Primärteilchengröße von 0,1 bis 0,5 $\mu m$, einer monoklinen Kristallstruktur, gegebenenfalls einem Gehalt an $Y_2O_3$ von 1 bis 10 Gew.-% und/oder an 1 bis 10 Gew.-% MgO, welches dadurch gekennzeichnet ist, daß man eine wäßrige Zirkonsalzlösung, die gegebenenfalls Yttrium- oder/und Magnesiumionen enthält, unter Rühren in eine Vorlage aus wässriger Basenlösung, wie z. B. Natronlauge, mit einem Gehalt an NaOH, der einen Überschuß von mindestens 0,5 Mol / l NaOH entspricht, gibt und die so erhaltene Reaktionsmischung hydrothermal bei einer Temperatur von 200 bis 400 °C behandelt, das erhaltene Produkt abfiltriert, mit Wasser chloridfrei wäscht und 100 bis 120 °C trocknet.

Als Zirkonsalze können eingesetzt werden:
$ZrOCl_2$, $ZrO(NO_3)_2$, $ZrOSO_4$, $Zr(NO_3)_4$, $Zr(SO_4)_2$.

Als Yttriumsalz kann eingesetzt werden:
$YCl_3$, $Y(NO_3)_3$, Y Acetat.

Als Magnesiumsalze können eingesetzt werden:
$MgCl_2$, $Mg(NO_3)_2$, $MgSO_4$, Mg-Acetat.

Als Base können NaOH, KOH und/oder LiOH eingesetzt werden.

Die überschüssige Menge an Base entsteht dann, wenn der saure Anteil der Zirkonsalzlösung durch die Base neutralisiert wurde.

Das erfindungsgemäße kristalline Zirkonoxidpulver kann zur Herstellung von Sinterkeramik verwandt werden.

Während des Sinterprozesses tritt je nach Sintertemperatur eine Phasenumwandlung in die tetragonale

2

bzw. kubische Form ein.

Beispiele

Beispiel 1

In eine Vorlage, bestehend aus einer Lösung von 120 g NaOH in 450 ml $H_2O$, werden unter Rühren 500 ml einer Lösung von $ZrOCl_2$ in $H_2O$ (1 Mol $ZrO_2$) getropft.

Die entstandene Hydroxidsuspension wird in einen 2 l-Rührautoklaven überführt und unter Rühren innerhalb 40 Minuten auf eine Temperatur von 300 °C aufgeheizt.

Nach einer Reaktionszeit von 2 h wird auf ca. 80 °C abgekühlt. Die Reaktionsmischung wird filtriert und der entstandene Filterkuchen wird mit Wasser so lange gewaschen, bis im Waschwasser kein Chlorid-Ion mehr nachgewiesen werden kann.

Der Filterkuchen wird bei 105 °C 24 h getrocknet. Das entstandene $ZrO_2$-Pulver hat eine spezifische Oberfläche von 15 $m^2$, einen Glühverlust von 1,57 % (1000 °C / 2 h) und einem $d_{50}$-Wert von 0,28 $\mu$m.

Beispiel 2

Es wird wie in Beispiel 1 verfahren. Die einzelnen Bedingungen sind in der Tabelle 1 aufgeführt.

Beispiel 3

Es wird wie in Beispiel 1 verfahren. Die einzelnen Bedingungen sind in der Tabelle 1 aufgeführt.

Beispiel 4

102 l einer Lösung von $YCl_3$ (13,5 g $Y_2O_3$ / l) und $ZrOCl_2$ (245,1 g $ZrO_2$ / l) werden bei 45 °C unter Rühren zu 150 l einer NaOH-Lösung (203,3 g NaOH / l) gegeben.

Die entstandene dickflüssige Suspension wird nach 45 Minuten in einen 250 1-Rührautoklaven überführt, auf 250 °C aufgeheizt und unter Rühren 3 h bei dieser Temperatur gehalten.

Nach Abkühlen der Suspension wird diese abfiltriert und der entstandene Filterkuchen mit Wasser so lange gewaschen, bis kein Chlorid-Ion im Waschwasser nachzuweisen ist.

Der Filterkuchen wird bei 105 °C 24 h getrocknet. Das entstandene $ZrO_2$-Pulver hat eine spezifische Oberfläche von 15 $m^2$ / g, einen Glühverlust von 1,52 % und einen $d_{50}$-Wert von 0,6 $\mu$m.

Beispiel 5

Es wird wie in Beispiel 4 verfahren. Die einzelnen Bedingungen sind in der Tabelle 1 aufgeführt.

Beispiel 6

Es wird wie in Beispiel 4 verfahren. Die einzelnen Bedingungen sind in der Tabelle 1 aufgeführt.

Beispiel 7

Es wird wie in Beispiel 4 verfahren. Jedoch wird nach der Hydroxid-Fällung mit Wasser gewaschen, bis das Waschwasser $Cl^-$-frei ist. Dann wird hydrothermal behandelt.

Tabelle 1

| Beisp. | ZrO₂ (Mol/l) | Cl⁻ (Mol/l) | MgO (%) bez.auf ZrO₂ | Y₂O₃ (%) bez.auf ZrO₂ | Überschuß an NaOH (Mol/l) | NH₃ (Mol/l) | T (°C) | t (h) | BET (m²/g) | Glühverlust (1000°C) (%) | Kristallitgröße (TEM)[6] (nm) l x b | d₁₀ d₅₀ d₉₀ (µm) | Sinterdichte (g/cm³) | Röntgenphase |
|---|---|---|---|---|---|---|---|---|---|---|---|---|---|---|
| 1 | 1 | 2 | – | – | 1 | – | 300 | 2 | 15 | 1,57 | 200x100 | 0,18 0,28 0,48 | – | m |
| 2 | 1 | 2 | – | – | 1 | – | 250 | 17 | 14 | 1,47 | 200x100 | 0,20 0,34 0,63 | – | m |
| 3 | 1 | – | – | – | – | 15 | 270 | 3 | 89 | 2,25 | <10 | 0,14 1,07 >10 | – | c |
| 4 | 0,81 | 1,62 | – | 5,3 | 1 | – | 250 | 3 | 15 | 1,52 | 200x100 | 0,3 0,62 5[1] | 5,97 | m |
| 5 | 0,81 | 1,62 | – | 5,3 | 0,01[2] | – | 250 | 4 | 142 | 6,2 | ≤10 | >10 | 5,17 | c |
| 6[5] | 0,81 | 1,62 | – | 5,3 | 0,3 | – | 300 | 5 | 22 | 1,1 | 200x80 | 0,13 0,21 1,0 | 6,04[3] | m |
| 7 | 0,81 | – | 3 | – | 0,5 | – | 300 | 3 | 25 | 1,7 | 60x20 | 0,27 0,62 1,5 | – | m |

1) Messung mit Granulometer
2) pH = 8,4
3) Sintertemperatur 1520 °C
4) m = monoklin
   c = cubisch bzw. tetragonal
5) Sinterkörper weist Risse auf
6) TEM = Transmissionselektronenmikroskopie

Bestimmung der Produkteigenschaften

BET-Oberfläche

4

Die Pulver werden 15 h bei 100 °C getrocknet und anschließend 20' bei 150 °C mit $N_2$ gespült. Die Messung erfolgt am Aerometer der Fa. Ströhlein.

Kornverteilung

Die Pulver werden in $H_2O$ suspendiert und durch 3 Minuten Ultraschall dispergiert. Die Messung erfolgt mit einer Zentrifuge der Fa. Alpine.

Sinterergebnisse

Die Sinterversuche werden an axialgepreßten Grünkörpern (Preßdruck 1 t / $m^2$) durchgeführt. Die Sinterdichte wird durch Auftrieb bestimmt. Die Sintertemperaturen betragen 1400 °C).

**Patentansprüche**

1. Kristallines Zirkonoxidpulver mit einer BET-Oberfläche von <30 $m^2$ / g, vorzugsweise 10 bis 20 $m^2$ / g, einer Primärteilchengröße von 0,1 bis 0,5 $\mu$m, einer monoklinen Kristallstruktur, gegebenenfalls einem Gehalt an $Y_2O_3$ von 1 bis 10 Gew.-% und/oder an 1 bis 10 Gew.-% MgO.

2. Verfahren zur Herstellung des kristallinen Zirkonoxidpulvers mit einer BET-Oberfläche von <30 $m^2$ / g, vorzugsweise 10 bis 20 $m^2$ / g, einer Primärteilchengröße von 0,1 bis 0,5 $\mu$m, einer monoklinen Kristallstruktur, gegebenenfalls einem Gehalt an $Y_2O_3$ von 1 bis 10 Gew.-% und/oder an 1 bis 10 Gew.-% MgO, dadurch gekennzeichnet, daß man eine wäßrige Zirkonsalzlösung, die gegebenenfalls Yttrium-oder/und Magnesiumionen enthält, unter Rühren in eine Vorlage aus wässriger Basenlösung, wie z. B. Natronlauge mit einem Gehalt an NaOH, der einen Überschuß von mindestens 0,5 Mol / l NaOH entspricht, gibt und die so erhaltene Reaktionsmischung hydrothermal bei einer Temperatur von 200 bis 400 °C behandelt, das erhaltene Produkt abfiltriert, mit Wasser chloridfrei wäscht und bei 100 bis 120 °C trocknet.

3. Verwendung des kristallinen Zirkonoxidpulvers gemäß Anspruch 1 zur Herstellung von Sinterkeramik.

**Claims**

1. A crystalline zirconium oxide powder having a BET surface of < 30 $m^2$/g and preferably from 10 to 20 $m^2$/g, a primary particle size of 0.1 to 0.5 $\mu$m, a monoclinic crystal structure and, optionally, a $Y_2O_3$ content of 1 to 10% by weight and/or an MgO content of 1 to 10% by weight.

2. A process for the production of the crystalline zirconium oxide powder having a BET surface of < 30 $m^2$/g and preferably from 10 to 20 $m^2$/g, a primary particle size of 0.1 to 0.5 $\mu$m, a monoclinic crystal structure and, optionally, a $Y_2O_3$ content of 1 to 10% by weight and/or an MgO content of 1 to 10% by weight, characterized in that an aqueous zirconium salt solution optionally containing yttrium and/or magnesium ions is introduced with stirring into an aqueous base solution, for example sodium hydroxide, having an NaOH content corresponding to an excess of at least 0.5 mol/l and the reaction mixture obtained is treated at a temperature of 200 to 400 °C, the product obtained is filtered off, washed with water until free from chloride and dried at 100 to 120 °C.

3. The use of the crystalline zirconium oxide powder claimed in claim 2 for the production of sintered ceramics.

**Revendications**

1. Poudre d'oxyde de zirconium cristalline, avec une surface BET inférieure à 30 $m^2$/g, de préférence 10 à 20 $m^2$/g, une grandeur de particules primaires de 0,1 à 0,5 $\mu$m, une structure cristalline monoclinique, éventuellement une teneur en $Y_2O_2$ de 1 à 10 % en poids et/ou une teneur de 1 à 10 % en poids de MgO.

2. Procédé de préparation de la poudre d'oxyde de Zirconium cristalline comportant une surface BET < 30 $m^2$/g de préférence 10 à 20 $m^2$/g, une grandeur de particules primaires de 0,1 à 0,5 $\mu$m, une

structure cristalline monoclinique, éventuellement une teneur en $Y_2O_3$ de 1 à 10 % en poids et/ou d'une teneur de 1 à 10 % en poids de MgO, caractérisé en ce qu'on ajoute une solution aqueuse de sel de zirconium, contenant éventuellement des ions Yttrium et/ou Magnésium, en agitant dans un récipient de solution aqueuse de base, comme par exemple de la lessive de soude avec une teneur en NaOH, qui correspond à un excédent d'au moins 0,5 mole/l de NaOH et en ce qu'on traite le mélange réactionnel obtenu de façon hydrothermale à une température allant de 200 à 400°C, qu'on filtre le produit obtenu, qu'on lave à l'eau pour éliminer les chlorures et qu'on sèche entre 100 et 120°C.

3. Utilisation de la poudre d'oxyde de Zirconium selon la revendication 1, pour produire de la céramique frittée.